Europäisches Patentamt

European Patent Office

Office européen des brevets

(19)

(11) Publication number: **0 319 056 B1**

(12) **EUROPEAN PATENT SPECIFICATION**

(45) Date of publication of patent specification: 27.12.91    (51) Int. Cl.⁵: **C08L 51/04,** C08L 55/02, C08L 57/00, C08L 77/00

(21) Application number: 88202415.1

(22) Date of filing: 28.10.88

(54) Thermoplastic elastomer mixture.

(30) Priority: 02.11.87 NL 8702603

(43) Date of publication of application:
07.06.89 Bulletin 89/23

(45) Publication of the grant of the patent:
27.12.91 Bulletin 91/52

(84) Designated Contracting States:
AT BE CH DE ES FR GB GR IT LI NL SE

(56) References cited:
EP-A- 0 048 058      EP-A- 0 202 214
DE-A- 3 332 325      DE-A- 3 420 307
US-A- 4 311 806      US-A- 4 444 951

(73) Proprietor: DSM N.V.
Het Overloon 1
NL-6411 TE Heerlen(NL)

(72) Inventor: Vroomans, Hubertus Johannes
Spaanse Singel 18
NL-6191 GK Beek (L.)(NL)
Inventor: Van Asperen, Pieter Jan
Op de Windhaspel 9
NL-6191 LC Beek (L.)(NL)
Inventor: Bruls, Wilhelmus Gerardus Marie
Gr. Wolterhoenstraat 32
NL-6243 BE Meerssen(NL)

(74) Representative: Hoogstraten, Willem Cornelis
Roeland et al
OCTROOIBUREAU DSM Postbus 9
NL-6160 MA Geleen(NL)

## Description

Thermoplastic elastomer mixture on the basis of a vinylaromatic compound and acrylonitrile on a rubber and a thermoplastic polymer with polar groups.

Such a polymer mixture is already known from EP-A-202214. This patent specification describes a polymer mixture on the basis of (A) a polyamide, (B) an acrylonitrile/butadiene/styrene graft copolymer and (C) a terpolymer obtained through polymerization of styrene, acrylonitrile and maleic acid anhydride. The terpolymer acts as a compatibility enhancing agent.

A drawback of this polymer mixture is that the terpolymer in the mixture first has to be synthesized through polymerization. This requires additional process steps and is therefore costly.

The purpose of the invention is to provide a polymer mixture which does not have said drawback.

This purpose is achieved due to the polymer mixture according to the invention being characterized in that the polymer mixture consists of:

a) 5-90 wt.% of a graft copolymer of a vinylaromatic compound and acrylonitrile on a rubber;

b) 5-90 wt.% of a thermoplastic polymer with polar groups;

c) 1-90 wt.% of a graft copolymer of a copolymer of a vinylaromatic compound and acrylonitrile on a diene rubber, on the rubber moreover being present monomers of a vinylaromatic compound and of a carboxy- and/or imide-containing compound in a molar ratio from 5:1 to 1:5.

Surprisingly, it has been found that the polymer mixture according to the invention possesses an optimum balance of properties, while moreover the graft copolymer of component (c) is very easy to synthesize. Furthermore, mouldings of the polymer mixture according the invention show high gloss and an attractive smooth surface.

The polymer mixture according to the invention preferably contains:

a) 20-60 wt.% of a graft copolymer of 20-80 wt.% of a copolymer of:

- 60-90 wt.% styrene and/or α-methylstyrene;
- 10-40 wt.% acrylonitrile;
- 0-20 wt.% of one or more other monomers

in the presence of 80-20 wt.% of a rubber;

b) 20-60 wt.% of a thermoplastic polymer with polar groups;

c) 1-60 wt.% of a graft copolymer of a copolymer of styrene and/or α-methylstyrene and acrylonitrile, in a ratio from 9:1 to 6:4, on a diene rubber, the rubber being in addition provided with monomers, of a vinylaromatic compound and of a carboxy- and/or imide-containing compound in a weight ratio from 2:1 to 1:2, and in a quantity of 0.1-25 wt.% relative to the copolymer and the rubber.

More preferably, the polymer mixture contains 10-30 wt.% of component (c).

The graft copolymer in component (a) can be synthesized in the known manner, for instance by means of mass polymerization, emulsion polymerization, suspension polymerization or mass suspension polymerization.

Suitable vinylaromatic compounds for the preparation of the graft copolymer are styrene, α-methylstyrene or derivatives thereof substituted to the aromatic ring. Suitable substituents are alkyl groups, chlorine or bromine. It is possible to use mixtures of two or more vinylaromatic compounds. Acrylonitrile can be replaced in whole or part by methacrylonitrile.

In addition to the vinylaromatic compound and acrylonitrile, one or more other monomers can be used in the preparation of the graft copolymer, in particular the acrylates, such as methylmethacrylate and/or ethylacrylate.

Any diene rubber can in principle be used as rubber in the preparation of the basic polymer.

Preference is given to polybutadiene homopolymers or butadiene copolymers with a butadiene content of 60-90 wt.%. If other dienes, for instance isoprene or the lower alkyl esters of acrylic acid, are used as comonomers, the butadiene content of the rubber can be reduced to 30 wt.% without any impairment of the properties of the graft copolymer.

In the polymerization the usual auxiliary agents are used, such as chain length regulators, emulsifiers (emulsion polymerization) and compounds yielding free radicals.

Component (a) preferably is an acrylonitrile-styrene-butadiene rubber (ABS), an acrylonitrile-styrene-acrylate rubber (ASA) or an ethylene-propylene-diene rubber polymerized with styrene and acrylonitrile (AES). More in particular, component (a) is ABS.

The thermoplastic polymers with polar groups that can be used as component (b) are known polymers, for instance polycarbonates, polyacetals, vinylaromatic polymers, vinylchloride polymers, polyamides, polyesters or mixtures of these polymers. The thermoplastic polymers preferably is a polyamide.

By polyamides are understood the conventional polyamide resins known under the name 'nylon', including the aliphatic polylactams, for instance polycaprolactam and nylon 6. Polyamides are obtained through polycondensation of aliphatic, alicyclic and aromatic diamines and dicarboxylic acids. Polyamides obtained in this way include nylon 4.6, nylon 6.6, nylon 6.10, nylon 9, nylon 11, nylon 12, nylon 6/6.6, nylon 6.6/6.10 and nylon 6/11. The polymer mixture according to the invention preferably contains 20-55 wt.% of a polyamide.

Component (c) of the polymer mixture according to the invention is obtained from a graft copolymer as mentioned for component (a). The two graft copolymers preferably have the same composition, but this is not strictly necessary. For the preparation of component (c) a graft copolymer as for component (a) is melted in a mixing device, after which 0.1-25 wt.% monomers of a vinylaromatic compound and of a carboxy- and/or imide-containing compound, relative to the graft copolymer, is added to the melt.

It should be noted that the addition of monomers to a polymer in the melt phase is in itself known in the art.

US-A-3862265 describes the addition of maleic acid anhydride and styrene to polyolefines, polybutadiene and butadiene-styrene rubbers in an extruder. DE-A-2943657 describes the addition of maleic acid anhydride to a styrene-butadiene block copolymer in an extruder. DE-A-3022258 describes the addition of such a block copolymer to a mixture of polyamide and ABS. The polymers obtained in accordance with said patent specifications have only separate maleic acid anhydride and/or styrene units in the side chains. The polymer mixture according to the invention is distinguished from this in that the polymer from component (c) has $\alpha$-methylstyrene and/or styrene-acrylonitrile copolymers in the side chains besides these separate units. This does not only significantly improve the compatibility of the mixture, but also its properties.

The polymer mixture is advantageously produced if for the preparation of the graft copolymer use is made of two or more butadiene homopolymers which differ from each other with respect to particle size. This particle size ($d_{50}$) should be smaller than 0.3 $\mu$m and larger than 0.35 $\mu$m, respectively. EP-A-116 330 describes such a polymer. If such a polymer is processed in the melt phase with a vinylaromatic compound and a carboxy- and/or imide-containing substance, it is highly suitable for use as an impact modifier.

The vinylaromatic compound added to the graft copolymer in the melt phase in a mixing device is styrene and/or $\alpha$-methylstyrene. The carboxy- and/or imide-containing compound is chosen from organic acids and/or anhydrides, imides or combinations thereof, for instance maleic acid anhydride, citraconic acid, itaconic acid, maleimide, N-phenylmaleimide and amides of weak acids. It is also possible besides styrene to supply maleic acid anhydride together with a primary amine, as a result of which the formation of a weak acid amide is promoted.

The choice of the carboxy- and/or imide-containing compound to be added depends on the application and the use. Thus, maleic acid anhydride and/or maleimide will be added to the polymer if the polymer mixture is meant for production of laminate or multi-layer tubular material.

The monomers of the vinylaromatic compound and the carboxy- and/or imide-containing group will be added in a molar ratio from 5:1 to 1:5, preferably 2:1 to 1:2. The polymer contains 0.2-15 wt.% of the carboxy- and/or imide-containing compound, relative to the graft copolymer.

Preferably the polymer contains 1-10 wt.% of the carboxy- and/or imide-containing compound, more in particular 1-7 wt.%.

The addition of the monomers to the graft copolymer can take place in a manner as described in US-A-3862265. It is important that the monomers be added to the melt phase of the graft copolymer, with intensive mixing. It is not necessary to use a solvent and/or a radical catalyst for this; it has been found, however, that the addition of a solvent, in particular a polar solvent, for instance acetone, and/or an initiator, in particular a peroxide or an azo compound, enhances the rate of grafting as well as the degree of conversion.

The process for the preparation of the graft copolymer as regards component (c) is characterized in that monomers of styrene and/or $\alpha$-methylstyrene and monomers of a carboxy- and/or imide-containing compound are injected into a mixing device in a molar ratio from 2:1 to 1:2, at a temperature of 180°C-325°C, with the graft copolymer present in the melt phase in the mixing device, the polymer having been obtained through polymerization of 40-80 wt.% of a mixture of:

a) 10-40 wt.% acrylonitrile;

b) 60-90 wt.% styrene and $\alpha$-methylstyrene;

c) 0-20 wt.% acrylate,

in the presence of 60-20 wt.% of a diene rubber, the residence time in the mixing device being 1 to 15 minutes and the temperature being 180 - 270 °C.

Preferably the temperature in the mixing device is 190-300°C, more in particular 200-250°C.

It is important that the monomers be added while the graft copolymer is in the melt phase, so that the grafting can take place at once, with intensive mixing.

Besides a solvent and a radical initiator, the usual auxiliary agents may be added to the mixing device, such as an antioxidant.

A solvent, for instance acetone, in a weight ratio from 5:1 to 1:20, preferably 2:1 to 1:10, is added to the monomers to be added. A radical catalyst, for instance dialkylperoxides, diacylperoxides, diacrylperoxides, organic per acids, organic per acid esters, alkylhydroperoxides and azo compounds, is added in a quantity of 0.01 to 0.5 wt.% relative to the basic polymer. Highly suitable antioxidants are for instance Irganox 1076[R], Irganox 1010[R] or di-tert.-butyl-p-cresol.

By preference the residence time in the mixing device is 1 to 15 minutes. In the customary manner, any non-converted monomers and the solvent can be removed, for instance through degassing. After this the polymer according to the invention can be granulated or processed.

The mixing device in which the monomers are added to the graft copolymer is for instance a batch kneader or a single or twin screw extruder. Preferably the mixing device is a single or twin screw extruder. Additionally, a static mixer can be placed after the mixing device, giving some prolongation of the mixing time.

The polymer mixture according to the invention is subsequently obtained by mixing the three components in a mixing device. This can be done in the usual manner. A suitable mixing device can be a batch kneader, a single or twin screw extruder or a static mixer. By preference the mixing device is an extended single or twin screw extruder, in which the polymer mixture is synthesized in one step. An extended extruder may be realized in the form of two extruders connected in series. In the first part of the extruder the ABS is modified with the vinylaromatic and the carboxy- and/or imide-containing compound. After the degassing, components (a) and (b) are added, following which the mixture is obtained.

The usual additives may be added to the polymer mixture according to the invention, for instance stabilizers, lubricants, kaoline, glass, and organic or inorganic filler or reinforcement agents.

Objects can be produced partly or wholly from a polymer mixture according to the invention.

The invention will be further elucidated with the following examples, without being restricted thereto.

Example I

a. Preparation of component (c1).

A graft copolymer of acrylonitrile-butadiene-styrene, with a rubber content of 40 wt.% and, relative to the SAN phase, 27 wt.% acrylonitrile, was supplied to a ZSK 30 D twin screw extruder ( speed 150 rpm, temperature 220ºC), with a throughput rate of 4 kg/h. Styrene, maleic acid anhydride and acetone in a ratio of 2/2/1 were added to the melt phase of the graft copolymer. The injection rate was 6.8 ml/min. The quantity of incorporated maleic acid anhydride was 4 wt.%.

b. Preparation of the polymer mixture

- 36 wt.% of an ABS with a rubber content of 40 wt.% and, relative to the SAN phase, 27 wt.% acrylonitrile;
- 45 wt.% of a polyamide, Ultramid B3®, BASF;
- 19 wt.% of the polymer prepared as described under a. above, were supplied to a Berstoff 25 D twin screw extruder with a screw diameter of 25 mm. The throughput rate was 7 kg/h, at a temperature of 220-230ºC.

The mixture obtained was cooled, dried and granulated. The resulting granulates were processed into film gate mouldings on an Arburg-1 injection moulding machine and characterized for notch impact strength (Izod, ISO 180 23ºC), heat deflection temperature (HDT, unannealed, according to ASTM D 648) and the E-modulus (N/mm$^2$, ASTM D 790). The following results were found:

Izod        78 KJ/m$^2$
HDT        94ºC (Vicat, unannealed 113ºC according to ASTM 1525)
E-modulus        2100 N/mm$^2$.

The mouldings thus obtained showed a high gloss and an attractive smooth surface.

Example II-VII and comparative example A, B, C.

The following components C were prepared; identical as above in example Ia:

EP 0 319 056 B1

Table 1

| component C | speed rpm. | T$^\circ$C | injection ml/min | S/MA/ACETON mol ratio | MFI dg/min |
|---|---|---|---|---|---|
| no | | | | | |
| C1 | 150 | 220 | 6.8 | 2/2/1 | 2.3 |
| C2 | 250 | 210 | 6.8 | 2/0/3 | 1.7 |
| C3 | 250 | 210 | 6.8 | 2/1.2/1.8 | 2.0 |
| C4 | 250 | 210 | 6.8 | 2/2/1 | 2.4 |

Component C was added to ABS and nylon identical as described in example Ib. The resulting properties are shown in table 2.

Table 2

| Ex | ABS wt% | PA wt% | Comp. C wt%. | Izod notch 23$^\circ$C/-20$^\circ$C | | Vicat $^\circ$C | E-mod. N/mm$^2$ |
|---|---|---|---|---|---|---|---|
| II | 45 | 45 | 10(C4) | 60 | 12 | 111 | 1980 |
| 111 | 36 | 45 | 19(C4) | 63 | 17 | 111 | 2000 |
| IV | 27 | 45 | 28(C4) | 79 | 17 | 111 | 2005 |
| V | 45 | 45 | 10(C3) | 55 | -- | 111 | 2020 |
| VI | 35 | 45 | 30(C3) | 69 | 22 | 111 | 2025 |
| VII | 25 | 45 | 30(C3) | 76 | 17 | 112 | 2025 |
| A | 45 | 45 | 10(C2) | 4.8 | -- | 109 | 2000 |
| B | 35 | 45 | 20(C2) | 4.9 | -- | 110 | 2010 |
| C | 25 | 45 | 30(C2) | 5.5 | -- | 109 | 2015 |

Example VIII-XIII and comparative example D and E

Identical as example II the components were mixed wherein as polyamide, nylon 11, i.e. Ribon B®, ATO, was used. The properties and results are given in table 3.

| Ex. | ABS %wt | Ribon %wt | C4 %wt | Izod, notched | | | Vicat $^\circ$C |
|---|---|---|---|---|---|---|---|
| | | | | 23$^\circ$C | 0$^\circ$C | -20$^\circ$C | |
| D | 55 | 45 | 0 | 11 | -- | -- | |
| E | 0 | 45 | 55 | 48 | 33 | 21 | 103 |
| VIII | 45 | 45 | 10 | 66 | 41 | 25 | 107 |
| IX | 36 | 45 | 10 | 69 | 55 | 39 | 106 |
| X | 25 | 45 | 30 | 57 | 53 | 49 | 107 |
| XI | 40 | 40 | 20 | 57 | 58 | 23 | 104 |
| XII | 33 | 60 | 17 | 63 | 63 | 35 | 110 |
| XIII | 30 | 55 | 15 | 66 | 63 | 21 | 114 |

Example XIV-XV and comparative example F

Identical as example II-VII, wherein as polyamide nylon 4.6, stanyl TW 300®, DSM, was used. The properties and results are given in table 4.

5

Table 4

| Ex | ABS %wt | Stanyl %wt | Comp. C %wt(C) | Izod | | | Vicat ¤C |
|---|---|---|---|---|---|---|---|
| | | | | 23¤C | 0¤C | -20¤C | |
| F | 55 | 45 | -- | 6 | -- | -- | 122 |
| XIV | 36 | 45 | 19(C4) | 15 | 14 | 10 | 126 |
| XVI | 36 | 45 | 19(C1) | 15 | 15 | 12 | 126 |

<u>Comparative example G, H</u>

A mixture was prepared containing the following components.

a. ABS (40 wt% rubber, 27 wt% acrylonitrile in the SAN-phase)

b. polyamid (Ultramid B3[R], BASF)

c. a copolymer of styrene and maleic anhydride (SMA):

SMA-1; 33 wt% MA, Mw 1700 or

SMA-2; 14 wt% MA, Mw 200.000

The properties and results are shown in table 5.

Table 5

| Ex | ABS wt% | PA wt% | SMA-1 wt% | SMA-2 wt% | Izod notched 23¤C |
|---|---|---|---|---|---|
| G | 35 | 50 | 15 | -- | 3 |
| H | 35 | 50 | -- | 15 | 6 |

**Claims**

1. Thermoplastic polymer mixture on the basis of a vinylaromatic compound and acrylonitrile on a rubber and a thermoplastic polymer with polar groups, characterized in that the polymer mixture consists of:
   a) 5-90 wt.% of a graft copolymer of a vinylaromatic compound and acrylonitrile on a rubber;
   b) 5-90 wt.% of a thermoplastic polymer with polar groups;
   c) 1-90 wt.% of a graft copolymer of a copolymer of a vinylaromatic compound and acrylonitrile on a diene rubber, on the rubber moreover being present monomers of a vinylaromatic compound and of a carboxy- and/or imide-containing compound in a molar ratio from 5:1 to 1:5.

2. Thermoplastic polymer mixture according to claim 1, characterized in that the polymer mixture contains:
   a) 20-60 wt.% of a graft copolymer of 20-80 wt.% of a copolymer of:
      - 60-90 wt.% styrene and/or $\alpha$-methylstyrene;
      - 10-40 wt.% acrylonitrile;
      - 0-20 wt.% of one or more other monomers
   in the presence of 80-20 wt.% of a rubber;
   b) 20-60 wt.% of a thermoplastic polymer with polar groups;
   c) 1-60 wt.% of a graft copolymer of a copolymer of styrene and/or $\alpha$-methylstyrene and acrylonitrile, in a ratio from 9:1 to 6:4, on a diene rubber, the rubber being in addition provided with monomers, of a vinylaromatic compound and of a carboxy- and/or imide-containing compound in a weight ratio from 2:1 to 1:2, and in a quantity of 0.1-25 wt.% relative to the copolymer and the rubber.

3. Thermoplastic polymer mixture according to one of the claims 1-2, characterized in that component b) is a polyamide.

4. Thermoplastic polymer mixture according to one of the claims 1-3, characterized in that the vinylaromatic compound is styrene and/or α-methylstyrene.

5. Thermoplastic polymer mixture according to one of the claims 1-4, characterized in that the carboxy- and/or imide-containing compound is chosen from: maleic acid anhydride, itaconic acid, citraconic acid, maleimide, N-phenylmaleimide or an amide of a weak acid.

6. Process for the preparation of a thermoplastic polymer mixture according to one of the claims 1-5 in which the separate components are mixed in a mixing device, characterized in that component (c) is prepared from a graft copolymer obtained through polymerization of 40-80 wt.% of a mixture of

a) 10-40 wt.% acrylonitrile;

b) 60-90 wt.% of styrene and α-methylstyrene;

c) 0-20 wt.% acrylate,

in the presence of 60-20 wt.% of a diene rubber, the graft copolymer being supplied in the melt phase to a mixing device, after which monomers of a vinylaromatic compound and of a carboxy- and/or imide-containing compound are injected into the mixing device in a molar ratio from 2:1 to 1:2, the quantity of injected carboxy- and/or imide-containing compound being 1-10 wt.% relative to the graft copolymer, the residence time in the mixing device being 1 to 15 minutes and the temperature being 180-270¤C.

7. Object produced in whole or in part from a polymer mixture in accordance with one of the claims 1-6.

**Revendications**

1. Mélange polymère thermoplastique à base d'un composé vinylaromatique et d'acrylonitrile sur un caoutchouc et un polymère thermoplastique comportant des groupes polaires, caractérisé en ce que le mélange polymère comprend :

(a) de 5 à 90% en poids d'un copolymère greffé d' un composé vinylaromatique et d'acrylonitrile sur un caoutchouc ;

(b) de 5 à 90% en poids d'un polymère thermoplastique comportant des groupes polaires ;

(c) de 1 à 90% en poids d'un copolymère greffé d'un copolymère composé vinylaromatique/acrylonitrile sur un caoutchouc diène et, en outre, le caoutchouc porte des monomères d'un composé vinylaromatique et d'un composé contenant des groupes carboxy et/ou imide dans un rapport molaire de 5:1 à 1:5.

2. Mélange polymère thermoplastique selon la revendication 1, caractérisé en ce qu'il contient :

(a) 20 à 60% en poids d'un copolymère greffé de 20 à 80% en poids d'un copolymère de :

- 60 à 90% en poids de styrène et/ou alpha-méthylstyrène ;

- 10 à 40% en poids d'acrylonitrile ;

- 0 à 20% en poids d'un ou plusieurs autre(s) monomère(s)

en présence de 80 à 20% en poids d'un caoutchouc ;

(b) 20 à 60% en poids d'un polymère thermoplastique comportant des groupes polaires ;

(c) 1 à 60% en poids d'un copolymère greffé d'un copolymère styrène et/ou alpha- méthylstyrène/acrylonitrile, dans un rapport de 9:1 à 6:4, sur un caoutchouc diène le caoutchouc comportant en outre des monomères, un composé vinylaromatique et/ou un composé contenant des groupes carboxy et/ou imide dans un rapport pondéral de 2:1 à 1:2 et en une quantité de 0,1 à 25% par rapport au poids du copolymère et du caoutchouc.

3. Mélange polymère thermoplastique selon la revendication 1 ou 2, caractérisé en ce que le composant (b) est un polyamide.

4. Mélange polymère thermoplastique selon l'une quelconque des revendications 1 à 3, caractérisé en ce que le composé vinylaromatique est le styrène et/ou l'alpha-méthylstyrène.

5. Mélange polymère thermoplastique selon l'une quelconque des revendications 1 à 4, caractérisé en ce que le composé contenant des groupes carboxy et/ou imide est choisi parmi l'anhydride d'acide maléique, l'acide itaconique, l'acide citraconique, le maléimide, le N-phénylmaléimide et un amide d'un acide faible.

6. Procédé de préparation d'un mélange polymère thermoplastique selon l'une quelconque des revendications 1 à 5, selon lequel on mélange les composants séparés dans un dispositif mélangeur, caractérisé en ce qu'on prépare le composant (c) à partir d'un copolymère greffé obtenu par polymérisation de 40 à 80% en poids d'un mélange de :

(a) 10 à 40% en poids d'acrylonitrile ;

(b) 60 à 90% en poids de styrène et d'alpha-méthylstyrène ;

(c) 0 à 20% en poids d'acrylate,

en présence de 60 à 20% en poids d'un caoutchouc diène, le copolymère greffé étant fourni dans la phase fondue d'un dispositif mélangeur, après quoi on injecte dans ce dispositif mélangeur en un rapport molaire compris entre 2:1 et 1:2 un composé contenant des groupes carboxy et/ou imide, la quantité du composé contenant des groupes carboxy et/ou imide étant de 1 à 10% en poids par rapport au copolymère greffé, la durée de séjour dans le dispositif mélangeur étant de 1 à 15 minutes et la température étant de 180 à 270° C.

7. Article produit en totalité ou en partie à partir d'un mélange polymère selon l'une quelconque des revendications 1 à 6.

## Patentansprüche

1. Thermoplastische Polymermischung auf Basis einer vinylaromatischen Verbindung und Acrylnitril auf einem Kautschuk und eines thermoplastischen Polymers mit polaren Gruppen, dadurch gekennzeichnet, daß die Polymermischung aus:

a) 5 bis 90 Gew.% eines Pfropfcopolymers einer vinylaromatischen Verbindung und Acrylnitril auf einem Kautschuk;

b) 5 bis 90 Gew.% eines thermoplastischen Polymers mit polaren Gruppen;

c) 1 bis 90 Gew.% eines Pfropfcopolymers eines Copolymers einer vinylaromatischen Verbindung und Acrylnitril auf einem Dienkautschuk besteht, wobei auf dem Kautschuk weiters Monomere einer vinylaromatischen Verbindung und einer carboxy- und/oder imidenthaltenden Verbindung in einem Molverhältnis von 5:1 bis 1:5 vorhanden sind.

2. Thermoplastische Polymermischung nach Anspruch 1, dadurch gekennzeichnet, daß die Polymermischung aus:

a) 20 bis 60 Gew.% eines Pfropfcopolymers von 20 bis 80 Gew.% von einem Copolymer von
- 60 bis 90 Gew.% Styrol und/oder $\alpha$-Methylstyrol;
- 10 bis 40 Gew.% Acrylnitril;
- 0 bis 20 Gew.% ein oder mehrerer anderer Monomere

in Gegenwart von 80 bis 20 Gew.% eines Kautschuks;

b) 20 bis 60 Gew.% eines thermoplastischen Polymers mit polaren Gruppen;

c) 1 bis 60 Gew.% eines Pfropfcopolymers eines Copolymers von Styrol und/oder $\alpha$-Methylstyrol und Acrylnitril in einem Verhältnis von 9:1 bis 6:4, auf einem Dienkautschuk, enthält, wobei der Kautschuk zusätzlich mit Monomeren einer vinylaromatischen Verbindung und einer carboxy- und/oder imidenthaltenden Verbindung in einem Gewichtsverhältnis von 2:1 bis 1:2, und in einer Menge von 0,1 bis 25 Gew.% relativ zum Copolymer und dem Kautschuk vorgesehen ist.

3. Thermoplastische Polymermischung nach einem der Ansprüche 1 bis 2, dadurch gekennzeichnet, daß die Komponente b) ein Polyamid ist.

4. Thermoplastische Polymermischung nach einem der Ansprüche 1 bis 3, dadurch gekennzeichnet, daß die vinylaromatische Verbindung Styrol und/oder $\alpha$-Methylstyrol ist.

5. Thermoplastische Polymermischung nach einem der Ansprüche 1 bis 4, dadurch gekennzeichnet, daß die carboxy- und/oder imidenthaltende Verbindung ausgewählt ist aus Maleinsäureanhydrid, Itaconsäure, Citraconsäure, Maleimid, N-Phenylmaleimid oder einem Amid einer schwachen Säure.

6. Verfahren zur Herstellung einer thermoplastischen Polymermischung nach einem der Ansprüche 1 bis 5, worin die getrennten Komponenten in einer Mischeinrichtung gemischt werden, dadurch gekennzeichnet, daß die Komponente c) aus einem Pfropfcopolymer erhalten durch Polymerisation von 40 bis 80 Gew.% einer Mischung von:

a) 10 bis 40 Gew.% Acrylnitril;

EP 0 319 056 B1

b) 60 bis 90 Gew.% Styrol und α-Methylstyrol;
c) 0 bis 20 Gew.% Acrylat,

in Gegenwart von 60 bis 20 Gew.% eines Dienkautschuks hergestellt ist, wobei das Pfropfcopolymer in der Schmelzphase einer Mischeinrichtung zugeführt wird, wonach Monomere einer vinylaromatischen Verbindung und einer carboxy- und/oder imidenthaltenden Verbindung in einem Molverhältnis von 2:1 bis 1:2 in die Mischeinrichtung eingespritzt werden, wobei die Menge an eingespritzter carboxy- und/oder imidenthaltender Verbindung 1 bis 10 Gew.% relativ zum Pfropfcopolymer beträgt, die Verweilzeit in der Mischeinrichtung 1 bis 15 Minuten und die Temperatur 180 bis 270° C beträgt.

7. Gegenstand, der zur Gänze oder teilweise aus einer Polymermischung gemäß einem der Ansprüche 1 bis 6 hergestellt ist.